# EUROPEAN PATENT APPLICATION

(11) **EP 1 130 287 A1**
(43) Date of publication of application: **05.09.2001**
(21) Application number: 01103506.0
(22) Date of filing: 15.02.2001
(51) Int. Cl.: F16H 45/02

(54) **Driving device for vehicles**

(30) Priority: 28.02.2000 JP 2000052011
(71) Applicant: Isuzu Motors Limited, Tokyo 140-8524 (JP)
(72) Inventor: Inoue, Eiji, Isuzu Motors Ltd, Fujisawa Factory, Kanagawa (JP); Iwao, Nobuyuki, Isuzu Advanced Eng. Center Ltd., Kanagawa (JP); Yamazaki,Atsushi, Isuzu Motors Ltd, Fujisawa Fact., Kanagawa (JP); Yamamoto, Yasushi, Isuzu Advanced Eng. Center Ltd., Kanagawa (JP); Okamoto, Takefumi, Isuzu Motors Ltd, Fujisawa Fact, Kanagawa (JP)
(74) Representative: Beetz & Partner Patentanwälte

(57) **Abstract**

A driving device for vehicles, which comprises an engine (2) mounted on a vehicle, a fluid coupling (4) operated by said engine (2), and a friction clutch (8) disposed between said fluid coupling (4) and a transmission (10), wherein the friction clutch (8) is composed of a multi-plate clutch.

## Description

### Field of the Invention

The present invention relates to a driving device for vehicles and, more particularly, to a driving device for vehicles, which comprises an engine mounted on a vehicle, a fluid coupling operated by the engine and a friction clutch disposed between the fluid coupling and a transmission.

### Description of the Prior Art

A fluid coupling comprises a pump that has an annular pump shell and plural impellers radially arranged in the pump shell, a turbine disposed facing the pump and having an annular turbine shell and plural runners radially arranged in the turbine shell, and an operation fluid filled in the pump and in the turbine. The pump is coupled to a crank shaft (input shaft as a fluid coupling) of a prime mover which may be, for example, a diesel engine, and the turbine is mounted on an output shaft arranged on the same axial direction as that of the input shaft. The thus constituted fluid coupling is used as a power driving coupling for ships and industrial machinery. A driving device for vehicles equipped with a fluid coupling has been disclosed in, for example, Japanese Laid-open Patent Publication (Kokai) No. 164730/1980 (JP-A 55-164730). In the driving device for vehicles equipped with the fluid coupling, an engine mounted on the vehicle, a fluid coupling, a dry type single-plate friction clutch and a transmission are arranged in series, the fluid coupling being used as a means for absorbing vibration, and the friction clutch functioning as a means for starting the vehicle and as a means for disconnecting or connecting power at the time of operating the transmission.

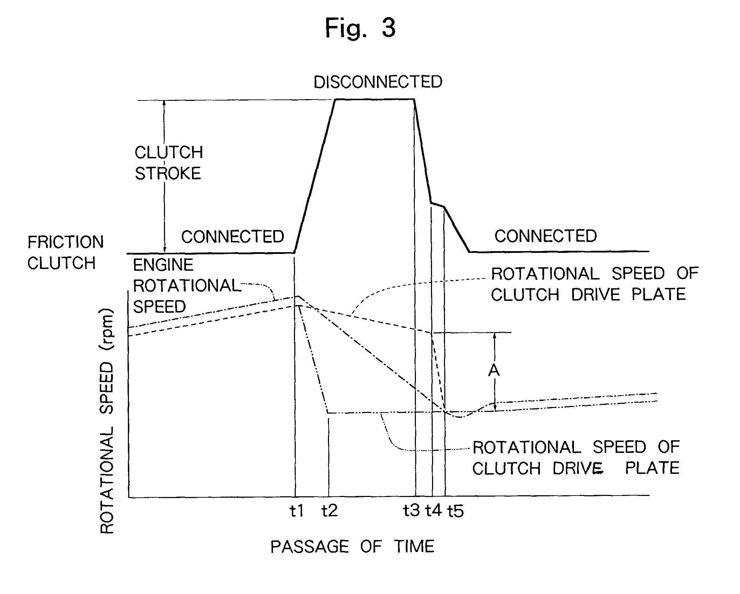

To allow the dry type single-plate friction clutch used in the above-mentioned driving device for vehicles to transmit a predetermined torque, a clutch drive plate (flywheel) connected to the output shaft of the fluid coupling and a clutch driven plate connected to the input shaft of the transmission need to have a considerably large diameter, so that their inertia of rotation becomes great. When the clutch drive plate (fly wheel) coupled to the output shaft of the fluid coupling has a large inertia of rotation, there often occurs an unexpected clutch shock at the time when the dry type single-plate friction clutch is engaged after the speed-change operation has been finished. Described below with reference to Fig. 3 is the state of operation of the members constituting the driving device for a vehicle equipped with the fluid coupling at the time of changing the speed.

Fig. 3 illustrates an example of changing the speed by shift-up, and the abscissa in Fig.3 represents the passage of time at the time of the speed-change operation. In Fig. 3, a solid line represents a clutch stroke of the friction clutch, an alternate long and short dash line represents an engine rotational speed, an alternate long and two short dashes line represents a rotational speed of the clutch driven plate of the friction clutch, and a broken line represents a rotational speed of the clutch drive plate of the friction clutch. In Fig. 3, the speed-change operation starts at a time t1 in traveling of the vehicle. The driver, first, disconnects the friction clutch at the time tl and, at the almost same time, releases the accelerator pedal. As a result, the engine rotational speed decreases as represented by the alternate long and short line. While the engine rotational speed decreases, the driver shifts up the transmission. At this time, since the friction clutch has been disconnected, the rotational speed of the clutch driven plate represented by the alternate long and two short dashes line drops down to the rotational speed corresponding to the traveling speed of the vehicle before arrival at a time t2, due to the action of the synchronizing device provided in the transmission. When the shift-up operation of the transmission completes, on the other hand, the driver starts connecting the friction clutch at a time t3, and the friction clutch is engaged in a partly-connected state at a time t4. At a time t5, it is judged that the rotational speed of the clutch driven plate is in agreement with the engine rotational speed, and the friction clutch is sharply engaged. However, the rotational speed of the clutch drive plate of the friction clutch connected to the turbine of the fluid coupling does not decline due to its force of inertia despite sharp drop in the rotational speed of the engine as described above. Therefore, there exists a considerably large difference (A) in the rotational speed between the clutch driven plate and the clutch drive plate at the time t4 at which the friction clutch is in the above-described partly-connected state. Namely, the rotation of the clutch drive plate sharply drops by the above-mentioned difference (A) in the rotational speed from the time t4 at which the friction clutch is in the partly-connected state to the time t5 at which the friction clutch is substantially completely connected, with the consequence that an unexpected clutch shock occurs.

On the other hand, the synchronizing action at the time of changing the speed of the transmission requires an extended period of time in the case where the members constituting the friction clutch connected to the input shaft produce a large inertia of rotation, and it is completed in a shorter period of time as they have a smaller inertia of rotation. In order to transmit a predetermined torque through the dry type single-plate friction clutch, however, the clutch driven plate connected to the input shaft must have a considerably large diameter. Therefore, limitation is imposed on decreasing the inertia of rotation of the clutch driven plate, and it is difficult to greatly shorten the time needed for changing the speed in the driving device for vehicles, that uses the dry type single-plate friction clutch.

### SUMMARY OF THE INVENTION

It is an object of the present invention to provide a driving device equipped with a fluid coupling, which is capable of decreasing the clutch shock that occurs when the friction clutch is engaged at the time of completion of the speed-change operation, and of shortening the time for changing the speed.

In order to solve the above-mentioned principal technical assignment, the present invention provides a driving device for vehicles, which comprises an engine mounted on a vehicle, a fluid coupling operated by said engine and a friction clutch disposed between said fluid coupling and a transmission, wherein said friction clutch is composed of a multi-plate clutch.

It is desired that the multi-plate clutch has a clutch outer that is connected to the output shaft of the fluid coupling and has a clutch center that is connected to the input shaft of the transmission.

### BRIEF DESCRIPTION OF THE DRAWINGS

Fig. 1 is a vertical sectional view of a driving device for vehicles, constituted according to the present invention;
Fig. 2 is a diagram of a fluid circuit of a fluid operation means equipped for the driving device for vehicles of Fig. 1; and
Fig. 3 is a diagram illustrating a clutch stroke, an engine rotational speed, a rotational speed of a clutch drive plate and a rotational speed of a clutch driven plate at the time of the speed-change operation in a driving device equipped with a conventional fluid coupling.

### DETAILED DESCRIPTION OF THE PREFERRED EMBODIMENTS

A preferred embodiment of a driving device for vehicles, constituted according to the present invention will now be described in further detail with reference to the accompanying drawings.

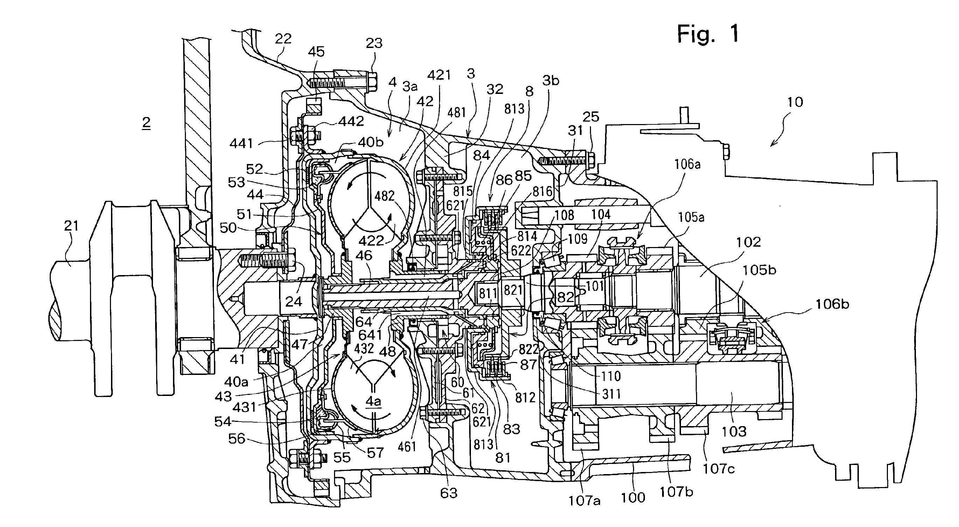

Fig. 1 is a vertical sectional view of a driving device for vehicles, constituted according to the present invention.

The driving device for vehicles shown in Fig. 1 is constituted by a diesel engine 2 which is a prime mover, a fluid coupling 4, a wet-type multi-plate friction clutch 8 and a manual transmission 10, which are arranged in series.

The driving device for vehicles according to the illustrated embodiment includes a coupling housing 3 for holding the fluid coupling 4 and the wet-type multi-plate friction clutch 8. The coupling housing 3 is opened on its one end side (left end side in Fig. 1) which is the engine side, and has a partitioning wall 31 on the other end side (right end side in Fig. 1) which is the transmission side. The coupling housing 3 has an intermediate wall 32 at a central portion in the axial direction thereof, and a fluid coupling-holding chamber 3a and a friction clutch-holding chamber 3b are partitioned from each other by the intermediate wall 32. The thus constituted coupling housing 3 is mounted, on the side of the engine 2 (left end side in Fig. 1), to a housing 22 mounted on the diesel engine 2 by a fastening means such as bolts 23, and is mounted, to the transmission side (on the right end side in Fig. 1), on a casing 100 of the manual transmission 10 by bolts 24.

Next, the fluid coupling 4 will be described.

The fluid coupling 4 is placed in the fluid coupling-holding chamber 3a in the coupling housing 3. The fluid coupling 4 in the illustrated embodiment includes a casing 41, a pump 42 and a turbine 43.

The casing 41 is mounted, by a fastening means such as bolts 441 and nuts 442, on the outer circumferential portion of a drive plate 44 of which an inner circumferential portion is mounted to the crank shaft 21 of the diesel engine 2 by bolts 24. On the outer circumference of the drive plate 44 is mounted a ring gear for starter, that meshes with a drive gear of a starter motor that is not shown.

The pump 42 is disposed facing the casing 41. The pump 42 includes a cup-shaped pump shell 421 and plural impellers 422 radially arranged in the pump shell 421. The pump shell 421 is attached to the casing 41 by a fastening means such as welding. Therefore, the pump shell 421 of the pump 42 is coupled to the crank shaft 21 through the casing 41 and the drive plate 44. Accordingly, the crank shaft 21 works as an input shaft of the fluid coupling 4.

The turbine 43 is placed in a chamber formed by the pump 42 and the casing 41, being opposed to the pump 42. The turbine 43 includes a cup-shaped turbine shell 431 arranged being opposed to the pump shell 421 of the pump 42, and plural runners 432 radially arranged in the turbine shell 431. The turbine shell 431 is mounted, by a fastening means such as welding, to a turbine hub 47 spline-fitted to an output shaft 46 arranged on the same axial line as that of the crank shaft 21 that is the input shaft.

The fluid coupling 4 in the illustrated embodiment includes a lock-up clutch 50 for directly coupling the casing 41 and the turbine 43 together. The lock-up clutch 50 has a clutch disk 51 that is disposed between the casing 41 and the turbine 43 to form an outer chamber 40a relative to the casing 41 and to form an inner chamber 40b relative to the turbine 43. The clutch disk 51 has an inner circumferential edge that can rotate relatively to the outer circumference of the turbine hub 47 and is supported to slide in the axial direction and, further, has, in the outer circumferential portion thereof, a clutch facing 52 mounted to its surface which faces the casing 41. Further, an annular recessed portion 53 is formed on the side of the inner chamber 40b along the outer circumferential portion of the clutch disk 51. In the recessed portion 53 are disposed plural damper springs 55 supported by support pieces 54 at a predetermined distance. Input-side retainers 56 mounted on the clutch disk 51 are arranged protrudingly on both sides of the plural damper springs 55, and output-side retainers 57 mounted on the turbine shell 431 of the turbine 43 are arranged protrudingly among the damper springs 55.

The lock-up clutch 50 of the illustrated embodiment is constituted as described above. Described below is its operation.

The clutch disk 51 is pushed leftward in Fig. 1 when the pressure of the operation fluid on the side of the inner chamber 40b is higher than the pressure of the operation fluid in the outer chamber 40a, i.e., when the operation fluid fed by a fluid operation means 6 that will be described later flows into the outer chamber 40a from the operation chamber 4a formed by the pump 42 and the turbine 43 through the inner chamber 40b. Therefore, the clutch facing 52 mounted on the clutch disk 51 is pushed onto the casing 41 so as to be engaged therewith by friction (lock-up clutch is connected). Accordingly, the casing 41 and the turbine 43 are directly coupled together through the clutch facing 52, clutch disk 51, input-side retainers 56, damper springs 55, and output-side retainers 57. The clutch disk 51, on the other hand, is pushed rightward in Fig. 1 when the pressure of the operation fluid of the outer chamber 40a is higher than the pressure of the operation fluid on the side of the inner chamber 40b, i.e., when the operation fluid fed by the fluid operation means 6 that will be described later circulates from the outer chamber 40a into the operation chamber 4a formed by the pump 42 and the turbine 43 through the inner chamber 40b. Accordingly, the clutch facing 52 mounted on the clutch disk 51 does not come into frictional engagement with the casing 41 (lock-up clutch is disconnected), and the drive coupling between the casing 41 and the turbine 43 is disconnected.

Pump housings 61 and 62 are mounted on the intermediate wall 32 of the coupling housing 3 by a fastening means such as bolts 63. In the pump housings 61, 62 is disposed a hydraulic pump 60 which is a source of hydraulic pressure for the fluid operation means 6 that will be described later. The hydraulic pump 60 is mounted on the pump shell 421 of the pump 42, and is rotatively driven by a pump hub 48 that is rotatably supported by the pump housing 61 via a bearing 481. An oil seal 482 is disposed between the outer circumferential surface of the pump hub 48 and an end of the pump housing 61. Further, a cylindrical member 64 is arranged between the pump hub 48 and the output shaft 46, and a passage 641 is formed between the cylindrical member 64 and the pump hub 48 so as to be communicated with the operation chamber 4a formed by the pump 42 and by the turbine 43 in the fluid coupling 4. The output shaft 46 is provided with a passage 461 for flowing the operation fluid. The passage 461 is opened at its one end in the left end surface of the output shaft 46 in Fig. 1 and is opened at its other end in the outer circumferential surface of the output shaft 46.

Next, the wet-type multi-plate friction clutch 8 will be described.

The wet-type multi-plate friction clutch 8 is placed in the friction clutch-holding chamber 3b in the coupling housing 3, and includes a clutch outer 81 and a clutch center 82. The clutch outer 81 is formed in the shape of a drum and has, in the inner circumferential portion thereof, a hub 811 that spline-fits to the output shaft 46 of the fluid coupling 4. An internal gear spline 812 is provided on the inner surface of the outer circumferential potion of the clutch outer 81, and plural friction plates 83 are fitted to the internal gear spline 812 so as to slide in the axial direction. An annular cylinder 813 is formed in an intermediate portion of the clutch outer 81, and an inner peripheral wall 814 constituting the annular cylinder 813 is fitted to the outer circumferential surface of a boss portion 621 of the pump housing 62 so as to rotate relatively thereto. A pushing piston 84 is disposed in the annular cylinder 813 to push the friction plates 83 and friction plates 87 that will be descried later. A hydraulic pressure chamber 815 formed by the annular cylinder 813 and the pushing piston 84 is communicated with the fluid operation means 6 that will be described later, through a passage 816 formed in the inner circumferential wall 814 that constitutes the annular cylinder 813 and through a passage 622 formed in the boss portion 621 of the pump housing 62. A plate 85 is fitted between the hub 811 of the clutch outer 81 and the pushing piston 84, and a compression coil 86 is disposed between the plate 85 and the pushing piston 84. Therefore, the pushing piston 84 is pushed by the resilient force of the compression coil spring 86 to move toward the left in Fig. 1 at all times.

The clutch center 82 is formed in the shape of a disk and has, in the inner circumferential portion thereof, a hub 821 that spline-fits to an input shaft 101 of the transmission 10. An external gear spline 822 is provided on the outer circumferential surface of the clutch center 82, and plural friction plates 87 are fitted to the external spline 822 so as to slide in the axial direction. Plural friction plates 87 mounted on the clutch center 82 and plural friction plates 83 mounted on the clutch outer 81 are alternatingly arranged.

The wet-type multi-plate friction clutch 8 according to the illustrated embodiment is constituted as described above. In a state shown in Fig. 1 where the operation fluid is not fed to the hydraulic pressure chamber 815 by the fluid operation means 6 that will be described later, the pushing piston 84 is brought to a left position (disengaging position) by the resilient force of the compression coil spring 86. Therefore, the plural friction plates 83 and the plural friction plates 87 are not pushed, i.e., the plural friction plates 83 are not brought into frictional engagement with the plural friction plates 87 and hence, the power is not transmitted from the output shaft 46 of the fluid coupling 4 to the input shaft 101 of the transmission 10. As the operation fluid is fed into the hydraulic pressure chamber 815 by the fluid operation means 6 that will be described later, the pushing piston 84 moves rightward in Fig. 1 against the resilient force of the compression coil spring 86. As a result, the plural friction plates 83 and the plural friction plates 87 are pushed and are brought into frictional engagement with each other. Therefore, the power transmitted to the output shaft 46 of the fluid coupling 4 is transmitted to the input shaft 101 of the transmission 10 through the clutch outer 81, plural friction plates 83, 87, and clutch center 82.

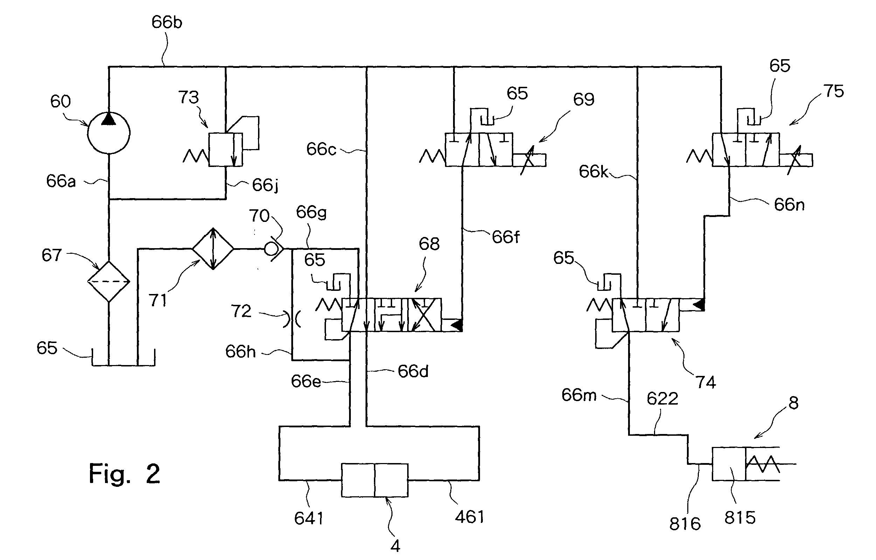

Next, the fluid operation means 6 will be described with reference to Fig. 2.

The fluid operation means 6 has a reserve tank 65 for containing the operation fluid, and a filter 67 is disposed in a passage 66a that communicates the reserve tank 65 with the hydraulic pump 60. The operation fluid in the reserve tank 65 is blown out by the hydraulic pump 60 into the passage 66b. The operation fluid blown out into the passage 66b is fed into the passage 66d communicated with the passage 461 formed in the output shaft 46 through the passage 66c and the direction control valve 68 for lock-up clutch, or is fed into the passage 66e communicated with the passage 641 that is communicated with the operation chamber 4a in the fluid coupling 4. In order to apply a pilot pressure on the direction control valve 68 for lock-up clutch, a pilot passage 66f is provided for communicating the passage 66b with the direction control valve 68 for lock-up clutch, and an electromagnetic change-over valve 69 for lock-up clutch is disposed in the pilot passage 66f. When the traveling speed of the vehicle exceeds a predetermined value, the electromagnetic change-over valve 69 for lock-up clutch is energized (ON) by a control means that is not shown.

When the electromagnetic change-over valve 69 for lock-up clutch is de-energized (OFF) as shown in Fig. 2, the pilot passage 66f is shut off and no pilot pressure acts on the direction control valve 68 for lock-up clutch. Therefore, the direction control valve 68 for lock-up clutch is positioned in a state shown in Fig. 2, whereby the passage 66c is communicated with the passage 66d, and the passage 66e is communicated with the return passage 66g. As a result, the operation fluid blown out by the hydraulic pump 60 into the passage 66b circulates into the reserve tank 65 through passage 66c, passage 66d, passage 461, outer chamber 40a of the fluid coupling 4, inner chamber 40b of the fluid coupling 4, operation chamber 4a formed by the pump 42 and the turbine 43 of the fluid coupling 4, passage 641, passage 66e, return passage 66g, check valve 70 disposed in the return passage 66g and cooling unit 71. When the operation fluid circulates as described above, the hydraulic pressure in the outer chamber 40a is higher than the hydraulic pressure in the inner chamber 40b and hence, the lock-up clutch 50 does not frictionally engage, as described above (lock-up clutch is disconnected).

When the electromagnetic change-over valve 69 for lock-up clutch is energized (ON), on the other hand, the pilot passage 66f is communicated and a pilot pressure acts on the direction control valve 68 for lock-up clutch. Therefore, the direction control valve 68 for lock-up clutch is operated to communicate the passage 66c with the passage 66e and to communicate the passage 66d with the reserve tank 65. As a result, the operation fluid blown out by the hydraulic pump 60 into the passage 66b circulates into the reserve tank 65 through passage 66c, passage 66e, passage 641, operation chamber 4a formed by the pump 42 and the turbine 43, inner chamber 40b, outer chamber 40a, passage 461 and passage 66d. When the operation fluid circulates as described above, the hydraulic pressure in the inner chamber 40b is higher than the hydraulic pressure in the outer chamber 40a and hence, the lock-up clutch 50 frictionally engages as described above (lock-up clutch is connected). When the pressure of the operation fluid in the passage 66f is lower than a predetermined value and a low pilot pressure acts on the direction control valve 68 for lock-up clutch in a state where the electromagnetic change-over valve 69 for lock-up clutch has been energized (ON), the spool 682 of the direction control valve 68 for lock-up clutch is brought to an intermediate position, so that the passage 66c is communicated with the passage 66d and with the passage 66e. In relation to this operation, a by-pass 66h is formed to communicate the passage 66e with the return passage 66g, and an orifice 72 is disposed in the by-pass 66h. Therefore, when the rotational speed of the hydraulic pump 60 is low and the pressure of the operation fluid in the passage 66b is lower than the predetermined value, the operation fluid blown into the passage 66b circulates through passage 66c, passage 66e and by-pass 66h equipped with the orifice 72.

The fluid operation means 6 in the illustrated embodiment has a relief passage 66j for connecting the passage 66a with the passage 66b, and a relief valve 73 is disposed in the relief passage 66j. The valve-opening pressure of the relief valve 73 has been set to be, for example, 6 kg/cm² which is a fluid pressure required for the clutch facing 52 mounted on the clutch disk 51 to be pushed onto the casing 41 to come into frictional engagement with it, when the lock-up clutch 50 is connected. When the pressure of the operation fluid in the passage 66b exceeds 6 kg/cm², the operation fluid is returned back to the passage 66a through the relief passage 66j.

The fluid operation means 6 in the illustrated embodiment includes a passage 66k and passage 66m for communicating the passage 66b with the passages 816, 622 communicated with the hydraulic pressure chamber 815 of the wet-type multi-plate friction clutch 8. A direction control valve 74 for friction clutch is disposed between the passage 66k and the passage 66m. In order to apply the pilot pressure on the direction control valve 74 for friction clutch, a pilot passage 66n is provided for communicating the passage 66b with the direction control valve 74 for friction clutch, and an electromagnetic change-over valve 75 for friction clutch is disposed in the pilot passage 66n. When de-energized (OFF), the electromagnetic change-over valve 75 for friction clutch communicates with the pilot passage 66n as shown in Fig. 1 and, when energized (ON), shuts off the communication with pilot passage 66n. The direction control valve 74 for friction clutch shuts off the communication between the passage 66k and the passage 66m in a state where no pilot pressure acts thereon, and communicates the passage 66k with the passage 66m when the pilot pressure acts thereon. When the electromagnetic change-over valve 75 for friction clutch is de-energized (OFF), therefore, the pilot pressure acts on the direction control valve 74 for friction clutch. Accordingly, the direction control valve 74 for friction clutch makes communication between the passage 66k and the passage 66m. As a result, the operation fluid blown out by the hydraulic pump 60 into the passage 66b is fed into the hydraulic chamber 815 of the wet-type multi-plate friction clutch 8 through passage 66k, passage 66m and passages 622, 816, whereby the pushing piston 84 moves rightward in Fig. 1 against the resilient force of the compression coil spring 86 and consequently, the plural friction plates 83 and the plural friction plates 87 are pushed onto each other to be frictionally engaged. When the electromagnetic change-over valve 75 for friction clutch is energized (ON), on the other hand, the communication with the pilot passage 66k is shut off and no pilot pressure acts on the direction control valve 74 for friction clutch. Therefore, the communication between the passage 66k and the passage 66m is shut off, and the passage 66m is opened to the reserve tank 65. As a result, the pushing piston 84 of the wet-type multi-plate friction clutch 8 moves leftward in Fig. 1 by the resilient force of the compression coil spring 86, and the frictional engagement is released between the plural friction plates 83 and the plural friction plates 87.

The electromagnetic change-over valve 75 for friction clutch is energized (ON) or de-energized (OFF) by a control means that is not shown at the time of speed-change in the manual transmission 10. That is, the wet-type multi-plate friction clutch 8 according to the illustrated embodiment constitutes an automatic clutch system, and the control means (not illustrated) energizes (ON) the electromagnetic change-over valve 75 for friction clutch in response to a signal that is output when a speed-change instruction switch mounted on a speed-change lever (not shown) is turned ON by a driver who operates the manual transmission 10 to change the speed, whereby transmission of power through the wet-type multi-plate friction clutch 8 is shut off. At the time when the shifting operation of the transmission has completed, the control means that is not shown de-energizes (OFF) the electromagnetic change-over valve 75 for friction clutch in response to a shift end signal from a shift stroke sensor that is not shown, so that the wet-type multi-plate friction clutch 8 is brought into frictional engagement.

Next the manual transmission 10 will be described with reference to Fig. 1.

The manual transmission 10 in the illustrated embodiment comprises a parallel shaft-type gear transmission which includes a case 100, an input shaft 101 disposed in the case 100 and having the clutch center 82 of the wet-type multi-plate friction clutch 8, an output shaft 102 disposed on the same axial line as that of the input shaft 101, and a counter shaft 103 disposed in parallel with the output shaft 102. A drive gear 104 is arranged on the input shaft 101. On the output shaft 102 are arranged rear-axle drive gears 105a, 105b, ···, and synchromesh devices 106a, 106b, ···. On the counter shaft 103 are provided counter gears 107a, 107b, 107c, ··· that mesh with the drive gear 104 and the rear-axle drive gears 105a, 105b, ··· at all times. The input shaft 101 is disposed penetrating through a hole 311 formed in a partitioning wall 31 of the coupling housing 3, and its one end is rotatably supported by the output shaft 46 of the fluid coupling 4 via a bearing 108 and an intermediate portion thereof is rotatably supported by the coupling housing 3 via a bearing 109. An oil seal 110 is disposed between the input shaft 101 and the inner circumferential surface of the hole 311 formed in the partitioning wall 31 of the coupling housing 3. The oil seal 110 prevents the clutch-cooling fluid in the friction clutch-holding chamber 3b of the coupling housing 3 from infiltrating into the case 100 of the manual transmission 10, and prevents the lubricating oil in the case 100 of the manual transmission 10 from infiltrating into the friction clutch-holding chamber 3b. The manual transmission may be constituted in a manner known per se, and is not described in detail here, since it has no direct relationship to the present invention.

The driving device for vehicles according to the illustrated embodiment is constituted as described above. Described below is the operation.

First, described below is the operation for starting the vehicle.

In a state where the diesel engine 2 is started up and is idling, the electromagnetic change-over valve 75 for friction clutch is de-energized (OFF) and the wet-type multi-plate friction clutch 8 is brought into frictional engagement as described above. The electromagnetic change-over valve 69 for lock-up clutch is de-energized (OFF), and the lock-up clutch 50 of the fluid coupling 4 is not brought into frictional engagement (lock-up clutch is disconnected) as described above. Therefore, the engine 2 maintains its idling state owing to the slipping of the fluid coupling 4. When the driver turns on the speed-change instruction switch mounted on the speed-change lever that is not shown to start the vehicle, the electromagnetic change-over valve 75 for friction clutch is energized (ON) as described above, and the transmission of power through the wet-type multi-plate friction clutch 8 is shut off. While the transmission of power through the wet-type multi-plate friction clutch 8 has been shut off, the speed-change operation is effected by using the speed-change lever, and when the manual transmission 10 is set to the start gear, the electromagnetic change-over valve 75 for friction clutch is de-energized (OFF) and the wet-type multi-plate friction clutch 8 is brought into frictional engagement. In this state, when an accelerator pedal is depressed to increase the engine rotational speed, the drive force generated on the crank shaft 21 (input shaft) of the diesel engine 2 is transmitted to the casing 41 of the fluid coupling 4 through the drive plate 44 as described earlier. Since the casing 41 and the pump shell 421 of the pump 42 is constituted as a unitary structure, the pump 42 is rotated by the drive force. As the pump 42 rotates, the operation fluid in the pump 42 flows toward the outer circumference along the impeller 422 due to the centrifugal force and flows into the side of the turbine 43 as indicated by an arrow. The operation fluid that has flown into the side of the turbine 43 flows toward the center side and is returned back to the pump 42 as indicated by an arrow. Thus, as the operation fluid in the operation chamber 4a formed by the pump 42 and the turbine 43 circulates in the pump 42 and in the turbine 43, the drive torque on the side of the pump 42 is transmitted to the side of the turbine 43 via the operation fluid. The drive force transmitted to the side of the turbine 43 is transmitted to the output shaft 46 through the turbine shell 431 and the turbine hub 47, and is further transmitted to the transmission 10 through the wet-type multi-plate friction clutch 8 to start the vehicle.

Next, described below is the function at the time of speed-change of the driving device for vehicles.

To change the manual transmission 10 into a predetermined speed while the vehicle is traveling, the driver turns on the speed-change instruction switch mounted on the speed-change lever that is not shown. Then, the electromagnetic change-over valve 75 for friction clutch is energized (ON) and the transmission of power by the wet-type multi-plate friction clutch 8 is shut off, as described above. While the transmission of power by the wet-type multi-plate friction clutch 8 has been shut off, the speed-change operation is effected by using the speed-change lever, and the manual transmission 10 is set to the predetermined speed. At this occasion, the rotational speed of the output shaft 102 is brought into synchronism with the rotational speed of the predetermined rear-axle drive gear 105 by the synchromesh device 106. This synchronizing action requires an extended period of time when the members constituting the friction clutch coupled to the rear-axle drive gear 105 has a large inertia of rotation (when the synchronizing load is large), while the synchronizing action can be accomplished in a short period of time when the inertia of rotation is small (when the synchronizing load is small). In the illustrated embodiment, however, the friction clutch is constituted by the wet-type multi-plate friction clutch 8 and hence, the size in the radial direction can be decreased compared with the conventional dry type single-plate friction clutch heretofore used. In the illustrated embodiment, furthermore, the clutch center 82 having a small inertia of rotation (having a small synchronizing load) is mounted on the input shaft 101. Therefore, the synchronizing action is accomplished within a short period of time, and the speed can be changed within a short period of time.

When the transmission has been shifted to the predetermined speed as a result of bringing the rotational speed of the output shaft 102 into synchronism with the rotational speed of the predetermined rear-axle drive gear 105 as described above, the electromagnetic change-over valve 75 for friction clutch is de-energized (OFF) as described above, and the wet-type multi-plate friction clutch 8 is brought into frictional engagement. At this occasion, when the clutch outer 81 of the wet-type multi-plate friction clutch 8 coupled to the output shaft 46 of the fluid coupling 4 has a large inertia of rotation, the clutch outer 81 does not lose the rotational speed despite a drop in the engine rotational speed owing to the slipping of the fluid coupling 4, as described above. Accordingly, there develops a considerably large difference in the rotational speed relative to the clutch center 82, whereby an unexpected clutch shock often takes place at the time when the friction clutch engages. In the case of the present invention, however, the clutch outer 81 of the wet-type multi-plate friction clutch 8 has a size in the radial direction smaller than that of the clutch drive plate (flywheel) of the conventional dry type single-plate friction clutch and hence, the inertia of rotation can be decreased. Accordingly, the occurrence of clutch shock can be prevented or reduced.

Being constituted as described above, the driving device of the present invention exhibits actions and effects as described below.

That is, according to the present invention, the friction clutch disposed between the fluid coupling and the transmission comprises a multi-plate clutch and hence, a size in the radial direction can be reduced compared with the clutch drive plate (flywheel) of the conventional dry type single-plate friction clutch. It is therefore allowed to decrease the inertia of rotation and to eliminate or decrease the occurrence of clutch shock at the time of changing the speed.

According to the present invention, further, the friction clutch disposed between the fluid coupling and the transmission comprises the multi-plate clutch and hence, a size in the radial direction can be reduced compared with the conventional dry type single-plate friction clutch, making it possible to decrease the inertia of rotation (i.e., to decrease the synchronizing load), so that it is allowed to conduct the synchronizing action within a short period of time and to shorten the time for changing the speed. Further, when the clutch outer constituting the multi-plate clutch is coupled to the output shaft of the fluid coupling and the clutch center having a small inertia of rotation (i.e., having a small synchronizing load) is coupled to the input shaft of the transmission, the time for synchronization can be further shortened.

According to the present invention, further, the friction clutch disposed between the fluid coupling and the transmission is the multi-plate clutch and hence, a size in the radial direction can be reduced compared with the conventional dry type single-plate friction clutch, making the device well for being mounted on a vehicle.

## Claims

1. A driving device for vehicles, which comprises an engine (2) mounted on a vehicle, a fluid coupling (4) operated by said engine (2), and a friction clutch (8) disposed between said fluid coupling (4) and a transmission (10), wherein said friction clutch (8) is composed of a multi-plate clutch.

2. A driving device for vehicles according to claim 1, wherein said multi-plate clutch has a clutch outer (81) that is connected to the output shaft (46) of the fluid coupling (4) and has a clutch center (82) that is connected to the input shaft (101) of the transmission (10).
